# EUROPÄISCHE PATENTSCHRIFT

(11) **EP 3 061 631 B1**
(45) Veröffentlichungstag und Bekanntmachung des Hinweises auf die Patenterteilung: **29.04.2020**
(21) Anmeldenummer: 16157298.7
(22) Anmeldetag: 25.02.2016
(51) Int. Cl.: B60D 1/64, B60D 1/62

(54) **ANSCHLUSSEINHEIT FÜR EINEN STECKVERBINDER**
CONNECTION UNIT FOR A CONNECTOR
UNITE DE RACCORDEMENT POUR UN CONNECTEUR A FICHE

(30) Priorität: 26.02.2015 DE 102015102791
(43) Veröffentlichungstag der Anmeldung: 31.08.2016
(73) Patentinhaber: ACPS Automotive GmbH, 71706 Markgröningen (DE)
(72) Erfinder: Gentner, Wolfgang, 71711 Steinheim (DE); Kadnikov, Aleksej, 71229 Leonberg (DE); Rimmelspacher, Bernhard, 76287 Rheinstetten (DE); Edelmann, Tobias, 70188 Stuttgart (DE); Dubovik, Ivan, 71642 Ludwigsburg (DE); Carrey, Vincent, 70176 Stuttgart (DE)
(74) Vertreter: Hoeger, Stellrecht & Partner Patentanwälte mbB

(56) Entgegenhaltungen:
- EP-A1- 2 374 637
- WO-A1-2013/068192
- WO-A1-2014/102171
- US-A1- 2016 121 792
- US-B1- 7 746 219

## Beschreibung

Die Erfindung betrifft eine Anschlusseinheit für einen Steckverbinder einer mit einem Kraftfahrzeug verbindbaren Transporteinrichtung, deren Leuchteinheiten entsprechend einer Beleuchtung des Kraftfahrzeugs anzusteuern sind, wobei die Anschlusseinheit eine mit dem Steckverbinder verbindbare Anschlusssätze für die einzelnen Leuchteinheiten aufweisende Steckverbinderaufnahme und eine elektrische Versorgungsleitung zum Anschluss der Anschlusssätze an eine kraftfahrzeugseitige Versorgungseinrichtung umfasst.

Derartige Anschlusseinheiten sind aus der US 7,746,219 B1 bekannt.

Beispielsweise sind diese Anschlusseinheiten übliche Steckdosen, die fahrzeugseitig montiert werden, um einen Steckverbinder der Transporteinrichtung aufnehmen zu können.

Das Problem bei derartigen Anschlusseinheiten besteht stets darin, dass teilweise - beispielsweise aufgrund mangelnder Nutzung oder aufgrund von Korrosion - beim Einstecken des Steckverbinders in die Steckverbinderaufnahme der Anschlusseinheit kein zuverlässiger Kontakt zwischen der Steckverbinderaufnahme und der Anschlusseinheit entsteht oder dass teilweise Leuchteinheiten der Transportvorrichtung nicht mehr funktionsfähig sind.

Da die Funktionsfähigkeit der Leuchteinheiten für die Verkehrssicherheit zwingend erforderlich ist, ist somit stets beim Anschluss einer derartigen Transportvorrichtung ein Sicherheitsrisiko verbunden.

Der Erfindung liegt daher die Aufgabe zugrunde, die Anschlusseinheit derart so auszubilden, dass mit dieser einerseits die Funktionsfähigkeit der elektrischen Kontakte zwischen der Steckverbindereinheit und dem Steckverbinder und andererseits die Funktionsfähigkeit der Leuchteinheiten in möglichst einfacher Weise erkannt werden kann.

Diese Aufgabe wird bei einer Anschlusseinheit der eingangs beschriebenen Art erfindungsgemäß dadurch gelöst, dass die Anschlusseinheit eine Prüfschaltung umfasst, mit welcher eine von der Versorgungseinrichtung unabhängige Funktionsprüfung aller über den in die Steckverbinderaufnahme eingesteckten Steckverbinder versorgten Leuchteinheiten der Transporteinrichtung erfolgt.

Der Vorteil der erfindungsgemäßen Lösung ist darin zu sehen, dass mit der erfindungsgemäßen Prüfschaltung die Möglichkeit besteht, in einfacher Weise die Funktion der Leuchteinheiten zu erkennen.

Um die Funktionsprüfung der Leuchteinheiten in einfacher Weise durchführen zu können, ist vorzugsweise vorgesehen, dass die Prüfschaltung die Leuchteinheiten der Transporteinrichtung durch einen den Anschlusssätzen zugeführten Prüfstrom überprüft.

Durch Zuführen eines Prüfstroms zu den einzelnen Anschlusssätzen und Erfassen des Prüfstroms besteht in einfacher Weise die Möglichkeit, die Funktionsfähigkeit jeder einzelnen der Leuchteinheiten zu erfassen und insbesondere dabei Probleme mit der elektrischen Kontaktierung und/oder der Funktionsweise der Leuchteinheiten selbst zu erkennen.

Alternativ oder ergänzend ist vorzugsweise vorgesehen, dass die Prüfschaltung die Leuchteinheiten durch Erfassen eines elektrischen Widerstandes an den einzelnen Anschlussätzen überprüft, das heißt, dass in diesem Fall der Spannungsabfall erfasst wird.

Auch mit einer derartigen Prüfmethode lassen sich in einfacher Weise Kontaktprobleme und generelle Funktionsprobleme der Leuchteinheiten erfassen.

Um eine Einzelprüfung der einzelnen Leuchteinheiten durchführen zu können, ist vorzugsweise vorgesehen, dass die Prüfschaltung mit jedem einzelnen der Anschlusssätze separat verbunden ist.

Eine vorteilhafte Lösung sieht insbesondere vor, dass die Prüfschaltung bei der Funktionsüberprüfung den über jeden der Anschlusssätze fließenden Strom mittels einer Strommesseinheit erfasst.

Eine derartige Strommesseinheit kann eine separate Strommesseinheit sein.

Vorzugsweise ist eine derartige Strommesseinheit bereits in ein in der Prüfschaltung eingesetzte integrierte Schaltung, beispielsweise einen Prozessor, integriert.

Ferner ist vorzugsweise vorgesehen, dass die Prüfschaltung den über den jeweiligen der Anschlusssätze fließenden Strom separat erfasst, um somit präzise die mit dem jeweiligen Anschlusssatz verbundene Leuchteinheit oder den mit dem jeweiligen Anschlusssatz verbundenen Verbraucher hinsichtlich seiner Funktionsfähigkeit überprüfen zu können.

Ferner ist vorzugsweise vorgesehen, dass die Prüfschaltung die Funktionsprüfung jedes Anschlusssatzes einzeln durchführt.

Eine Einzeldurchführung des jeweiligen Anschlusssatzes kann dadurch erfolgen, dass die Prüfschaltung die Funktionsprüfung der Anschlusssätze gleichzeitig durchführt.

Alternativ dazu ist es aber auch denkbar, dass die Prüfschaltung die Funktionsprüfung der Anschlusssätze in einer Reihenfolge nacheinander ausführt.

Um in geeigneter Weise einen Prüfzyklus der Prüfschaltung starten zu können, ist vorzugsweise vorgesehen, dass die Prüfschaltung einen Prüfzyklus beim Auftreten mindestens eines externen Ereignisses startet.

Ein derartiges externes Ereignis ist beispielsweise ein Einstecken des Steckverbinders in die Steckverbinderaufnahme und/oder ein Starten des Motors des Kraftfahrzeugs und/oder eine Anforderung seitens einer Fahrzeugsteuerung und/oder eine manuell ausgelöste Anforderung einer Bedienungsperson.

Das Einstecken des Steckverbinders in die Steckverbinderaufnahme lässt sich in einfacher Weise durch einen Schalter oder einen Sensor erfassen, der beim Einstecken des Steckverbinders in der Steckverbinderaufnahme anspricht.

Alternativ dazu ist es aber auch denkbar, das Einstecken des Steckverbinders in die Steckverbinderaufnahme durch elektronische Detektion mindestens eines mit der Steckverbinderaufnahme verbundenen Verbrauchers zu erfassen.

Bei der Durchführung des Prüfzyklus ist erfindungsgemäß vorgesehen, dass die Prüfschaltung zur Durchführung eines Prüfzyklus den zu prüfenden Anschlusssatz von der Versorgungseinrichtung elektrisch abkoppelt, um mögliche Störungen zu vermeiden.

Ferner ist vorzugsweise vorgesehen, dass die Prüfschaltung nach Durchführung der Funktionsprüfung jeden Anschlusssatz wiederum mit der Versorgungseinrichtung elektrisch koppelt.

Eine besonders vorteilhafte Lösung sieht vor, dass die Prüfschaltung einen Prozessor erfasst, welcher einen Prüfzyklus ausführt und während dieses Prüfzyklus die Leuchteinheiten überprüft.

Ferner ist vorteilhafterweise vorgesehen, dass die Prüfschaltung mit jeder zu einem der Anschlusssätze führenden und von der Versorgungseinrichtung kommenden Einzelversorgungsleitung bei der Durchführung der Funktionsprüfung verbunden ist, so dass die Prüfschaltung und die Einzelversorgungsleitungen nicht völlig separat voneinander geführt sind, sondern die Einzelversorgungsleitungen ständig mit den Anschlusssätzen verbunden bleiben.

Dies lässt beispielsweise gegebenenfalls auch eine Überprüfung der Verbindung der Einzelversorgungsleitung mit dem Anschlusssatz zu.

Eine vorteilhafte Lösung sieht vor, dass die Prüfschaltung eine Unterbrecherschaltung umfasst, welche bei der Funktionsprüfung der Leuchteinheiten die Verbindung zwischen dem jeweiligen Anschlusssatz und der Versorgungseinrichtung unterbricht.

Vorzugsweise ist dabei die Unterbrecherschaltung in den Einzelversorgungsleitungen zwischen den Anschlusssätzen und der Versorgungseinrichtung angeordnet, um diese elektrisch zu unterbrechen.

Beispielsweise ist in diesem Fall die Unterbrecherschaltung so ausgeführt, dass sie in jeder der Einzelversorgungsleitungen einen Schalter vorsieht, der ein mechanischer oder ein elektrischer Schalter sein kann, um die elektrische Verbindung zwischen dem jeweiligen Anschlusssatz und der Versorgungseinrichtung bei jeder Einzelversorgungsleitung unterbrechen zu können. Prinzipiell wäre es ausreichend, wenn die Unterbrecherschaltung alle spannungsführenden Leitungen der Versorgungsleitung, das heißt insbesondere alle spannungsführenden Einzelversorgungsleitungen elektrisch unterbricht, ohne die Masseverbindungen zu berücksichtigen.

Um jedoch jegliche Rückwirkungen der Versorgungseinrichtung auf die Prüfschaltung und insbesondere die Prüfung durch die Prüfschaltung zu verhindern, ist vorzugsweise vorgesehen, dass die Unterbrecherschaltung eine Masseverbindung zwischen dem jeweiligen Anschlusssatz und einer Fahrzeugmasse elektrisch unterbricht.

Die Prüfschaltung kann dabei in unterschiedlichster Art und Weise ausgeführt sein.

Besonders vorteilhaft ist es bei Verwendung einer Unterbrecherschaltung, wenn der Prozessor der Prüfschaltung die Unterbrecherschaltung ansteuert, und zwar insbesondere im Zuge der Durchführung des jeweiligen Prüfzyklus.

Die erfindungsgemäße Prüfschaltung kann jedoch nicht nur dazu eingesetzt werden, die Funktion der für die Verkehrssicherheit notwendigen Leuchteinheiten zu überprüfen, sondern auch dazu, die Funktion aller mit dem Steckverbinder versorgten Verbraucher zu überprüfen.

Aus diesem Grund ist vorgesehen, dass mit der Prüfschaltung eine von der Versorgungseinrichtung unabhängige Funktionsprüfung aller über den in die Steckverbinderaufnahme eingesteckten Steckverbinder versorgten Verbraucher der Transporteinrichtung erfolgt.

Hinsichtlich des Ergebnisses der Funktionsprüfung wurden im Zusammenhang mit der bisherigen Erläuterung der einzelnen Ausführungsformen keinerlei Angaben gemacht.

So sieht eine vorteilhafte Lösung vor, dass die Prüfschaltung ein einem Prüfergebnis der Funktionsprüfung entsprechendes Ausgangssignal erzeugt.

Ein derartiges Ausgangssignal kann in vielfältiger Weise zur Anzeige des Prüfergebnisses eingesetzt werden.

Beispielsweise ist es denkbar, das Ausgangssignal dazu einzusetzen, im Kraftfahrzeug selbst eine Anzeigeeinheit, beispielsweise eine am Armaturenbrett angeordnete Anzeigeeinheit, anzusteuern.

Um der Bedienungsperson in möglichst einfacher Weise das Ergebnis der Funktionsprüfung an Ort und Stelle zu übermitteln, ist vorzugsweise vorgesehen, dass die Anschlusseinheit eine optische Anzeigeeinheit aufweist und dass die Prüfschaltung die optische Anzeigeeinheit mit dem Ausgangssignal ansteuert.

Damit ist für die Bedienungsperson unmittelbar an der Anschlusseinheit ersichtlich, wie die Funktionsprüfung ausgefallen ist.

Die Anzeigeeinheit kann dabei eine übliche Display-Einheit sein, die an der Anschlusseinheit angeordnet ist.

Besonders einfach und daher vorteilhaft ist es, wenn die optische Anzeigeeinheit mit einem optischen Anzeigeelement ein Lichtsignal erzeugt.

Ein derartiges Lichtsignal ist in besonders vorteilhafterweise für die Bedienungsperson auffällig, einfach zu erkennen und einfach zu deuten.

Hinsichtlich der Detailliertheit der Anzeige der Funktionsprüfung sind ebenfalls die unterschiedlichsten Möglichkeiten denkbar.

Um eine möglichst einfache Information der Bedienungsperson übermitteln zu können, ist vorzugsweise vorgesehen, dass die Prüfschaltung bei einem positiven Prüfergebnis aller Leuchteinheiten ein einziges Ausgangssignal erzeugt.

Dies hat den großen Vorteil, dass die Bedienungsperson durch ein einziges Ausgangssignal darüber informiert wird, dass alle Leuchteinheiten und/oder Verbraucher funktionsfähig sind.

Ein derartiges einziges Ausgangssignal lässt sich besonders einfach als einzelnes Lichtsignal erzeugen, da die Bedienungsperson dann nur wissen muss, ob das Lichtsignal erscheint oder nicht und bei Erscheinen des Lichtsignals sich sicher sein kann, dass alle Leuchteinheiten und/oder Verbraucher funktionsfähig sind.

Darüber hinaus kann das Lichtsignal aber auch insoweit differenziert werden, dass das einzige Lichtsignal bei positivem Prüfungsergebnis eine andere Farbe hat, als bei negativem Prüfungsergebnis.

Eine andere vorteilhafte Lösung sieht vor, dass die Prüfschaltung das Prüfergebnis der einzelnen Leuchteinheiten durch einzelne Ausgangssignale anzeigt.

Diese einzelnen Ausgangssignale können dann auch einzelne Lichtsignale sein, wobei in diesem Fall, die optische Anzeigeeinheit eine Vielzahl von einzelnen Lichtsignalen erzeugen muss.

Darüber hinaus betrifft die Erfindung auch noch ein Kraftfahrzeug mit einer Anschlusseinheit gemäß den vorstehend beschriebenen Merkmalen.

Ferner betrifft die Erfindung auch ein Kraftfahrzeug mit einer mit diesem gekoppelten Transporteinrichtung und einer Anschlusseinheit gemäß den voranstehend beschriebenen Merkmalen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung eines Kraftfahrzeugs mit einer an diesem angehängten Transporteinrichtung in Form eines Anhängers;
- Fig. 2: eine schematische Darstellung eines Kraftfahrzeugs mit einer an diesem gehaltenen Transporteinrichtung in Form eines Lastenträgers;
- Fig. 3: eine schematische Darstellung einer Heckbeleuchtungseinheit der Transporteinrichtung;
- Fig. 4: einen Längsschnitt durch eine Anschlusseinheit mit einem eingesteckten Steckverbinder;
- Fig. 5: ein Schaltschema einer erfindungsgemäßen Prüfschaltung;
- Fig. 6: eine Draufsicht auf ein erstes Ausführungsbeispiel einer erfindungsgemäßen Anschlusseinheit mit einem einzigen optischen Anzeigeelement und
- Fig. 7: eine Draufsicht auf ein zweites Ausführungsbeispiel einer erfindungsgemäßen Anschlusseinheit mit einer Vielzahl von optischen Anzeigeelementen.

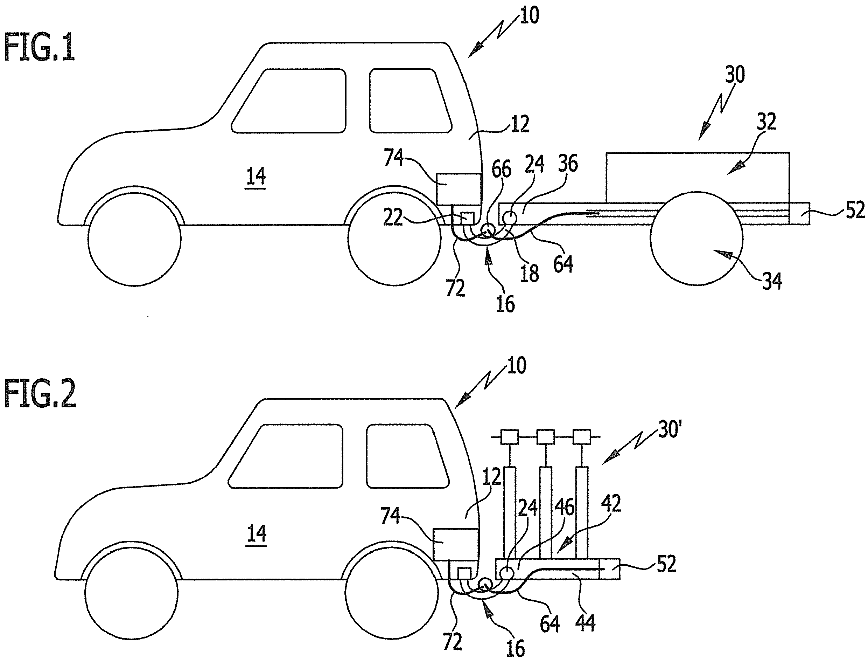

Ein in Fig. 1 dargestelltes, als Ganzes mit 10 bezeichnetes Kraftfahrzeug ist an einem Heckbereich 12 einer Fahrzeugkarosserie 14 mit einer als Ganzes mit 16 bezeichneten Anhängekupplung versehen, welche beispielsweise einen Kugelhals 18 aufweist, der fahrzeugseitig mit einem Trägersystem 22 verbunden ist, welches am Heckbereich 12 der Fahrzeugkarosserie 14 montiert ist und beispielsweise an einem gegenüberliegenden Ende eine Kupplungskugel 24 trägt.

Mit der Anhängekupplung 16 besteht die Möglichkeit, das Kraftfahrzeug 10 mit einer als Ganzes mit 30 bezeichneten Transporteinrichtung zu verbinden, welche im Fall der Fig. 1 als Anhänger 32 ausgebildet ist, der in gleicher Weise wie das Kraftfahrzeug mit Rädern 34 versehen ist und in diesem Fall zum Beispiel über eine Kupplungskugelaufnahme 36 mit der Kupplungskugel 24 verbunden ist, so dass der Anhänger 32 über das durch die Kupplungskugel 24 und die Kupplungskugelaufnahme 36 gebildete Gelenk mit dem Kraftfahrzeug 10 gekoppelt ist und von diesem gezogen werden kann.

Alternativ ist es denkbar, wie in Fig. 2 dargestellt, dass als Transporteinrichtung 30' ein als Ganzes mit 42 bezeichneter Lastenträger vorgesehen ist, welcher sich vollständig an der Anhängekupplung 16 abstützt und dabei mit einer Kupplungskugelaufnahme 46 zumindest an der Kupplungskugel 24 angreift, jedoch mit der Kupplungskugel 24 kein Gelenk bildet, sondern durch eine klemmende Aufnahme der Kupplungskugel 24 oder eine ergänzende Abstützung sich mit seiner ganzen Masse an der Anhängekupplung 16 abstützt.

Hierzu weist der Lastenträger 42 eine Lastenträgerbasis 44 auf, die ausschließlich von der Anhängekupplung 16 getragen wird.

Auf der Lastenträgerbasis 44 sind dabei verschiedene Gegenstände, wie beispielsweise Fahrräder, transportierbar.

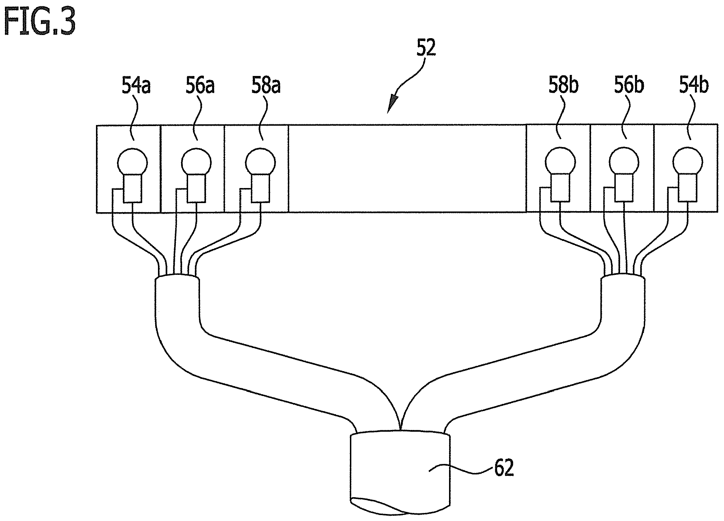

Bei beiden Transporteinrichtungen 30 und 30' ist auf einer dem Kraftfahrzeug 10 abgewandten Seite eine Heckbeleuchtungseinheit 52 vorgesehen, die, wie beispielsweise in Fig. 3 dargestellt, Blinkleuchten 54a, b, Bremsleuchten 56a, b und Rückleuchten 58a, b aufweist, die jeweils an der linken und rechten Außenseiten der Heckbeleuchtungseinheit 52 angeordnet sind.

Diese Leuchten 54 bis 58 werden über ein der Transporteinrichtung 30 bzw. 30' zugeordnetes elektrisches Versorgungsnetz 62 versorgt, wobei das elektrische Versorgungsnetz 62 über eine Zuleitung 64 mittels einer Steckverbindereinheit 66 mit einer fahrzeugseitigen Versorgungsleitung 72 verbindbar ist, die ihrerseits zu einer fahrzeugseitigen Versorgungseinrichtung 74 führt, welche die einzelnen Leuchteinheiten 54, 56 und 58 betreibt und durch gezielte Versorgung mit elektrischer Leistung entsprechend den Gegebenheiten ansteuert.

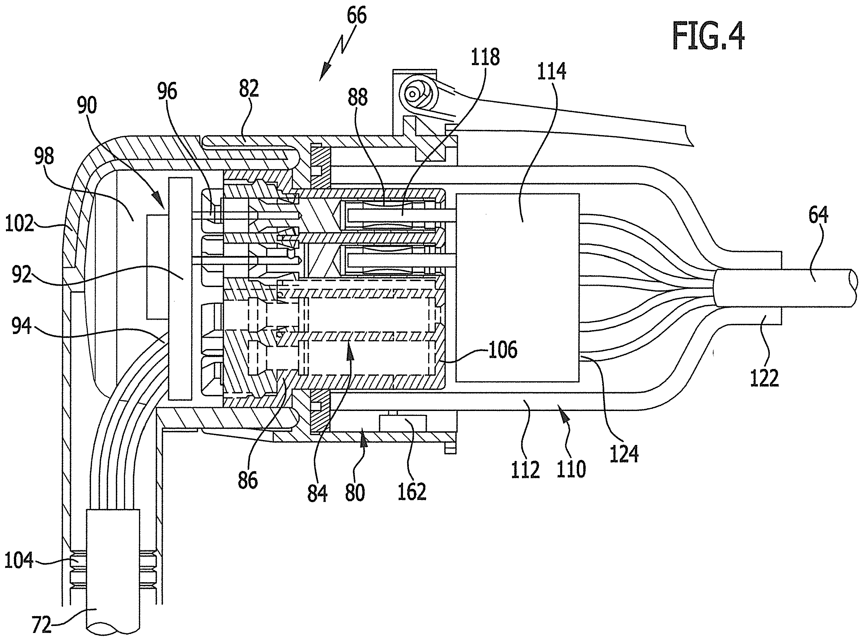

Die Steckverbindereinheit 66 umfasst, wie in Fig. 4 dargestellt, eine als Ganzes mit 80 bezeichnete und beispielsweise durch Anordnung an dem Kugelhals 18 für eine Bedienungsperson leicht zugängliche Anschlusseinheit mit einem beispielsweise am Kugelhals 18 fixierbaren Außengehäuse 82, in welchem eine als Ganzes mit 84 bezeichnete Kontakteinheit angeordnet ist, die vorzugsweise einen Kontaktträger 86 umfasst, in welchem Steckkontakte 88 gehalten sind.

Die Steckkontakte 88 sind dann ihrerseits mit der von der Versorgungseinrichtung 74 kommenden Versorgungsleitung 72 verbunden und außerdem mit einer Prüfschaltung 90 verbunden, welche in dem Außengehäuse 82 der Anschlusseinheit 80 ebenfalls angeordnet ist.

Vorzugsweise erfolgt die Verbindung zwischen der Versorgungsleitung 72 und den einzelnen Steckkontakten 68 über die als Ganzes in dem Außengehäuse 82 angeordnete Prüfschaltung 90, die beispielsweise eine Schaltungsplatine 92 umfasst, die Anschlüsse 94 für die Versorgungsleitung 72 aufweist, und zu den Steckkontakten 88 führende Kontaktanschlüsse 96 aufweist, welche beispielsweise als zu den Steckkontakten 88 führende Kontaktstifte ausgebildet sein können.

Vorzugsweise ist dabei die Prüfschaltung 90 in dem Außengehäuse 82 derart angeordnet, dass diese in einem Innenraum 98 des Außengehäuses 92 liegt, der zwischen der Kontakteinheit 84 und einem rückwärtigen Gehäusedeckel 102 angeordnet ist, wobei der rückwärtige Gehäusedeckel 102 gleichzeitig eine Versorgungsleitungsaufnahme 104 aufweist, durch welche die Versorgungsleitung 72 in das Außengehäuse 82 hineingeführt ist.

Der Innenraum 98 zur Aufnahme der Prüfschaltung 90 liegt beispielsweise auf einer einer Zugangsseite 106 der Kontakteinheit 84 abgewandten Rückseite derselben.

Eine alternative Lösung sieht vor, den Innenraum 98 seitlich neben der Kontakteinheit 84 anzuordnen.

Die Anschlusseinheit 80 bildet auf ihrer Zugangsseite mit dem Außengehäuse 82 und der Kontakteinheit 84 eine Steckverbinderaufnahme 108, so dass über die Zugangsseite 106 die Steckkontakte 88 mit komplementären Steckkontakten 118 eines als Ganzes mit 110 bezeichneten Steckverbinders verbindbar sind, der ebenfalls ein Gehäuse 112 aufweist, in welchem eine Kontakteinheit 114 angeordnet ist, die ihrerseits einen Kontaktträger 116 umfasst, der die zu den Steckkontakten 88 komplementären Steckkontakte 118 aufnimmt.

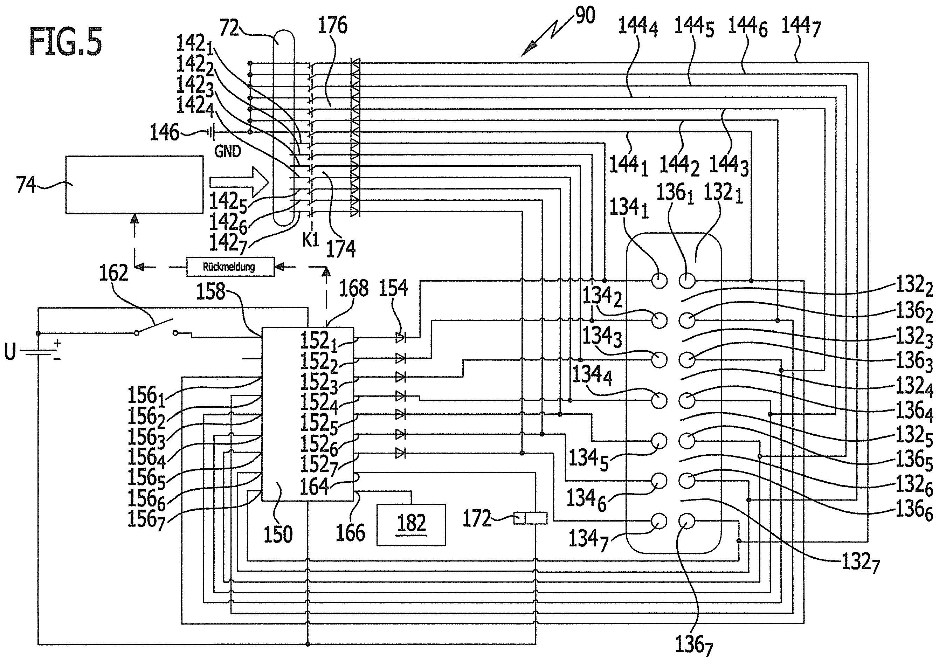

Die Steckkontakte 118 sind dann ihrerseits wiederum mit der Zuleitung 64 verbunden, die über eine Zuleitungsaufnahme 122 in das Gehäuse 112 des Steckverbinders 110 geführt ist und mit den jeweiligen komplementären Steckkontakten 118 über deren einzelne Anschlüsse 124 verbunden ist. Gemäß dem in Fig. 5 dargestellten Schaltschema der erfindungsgemäßen Prüfschaltung 90 werden bei der erfindungsgemäßen Steckverbindereinheit 66 elektrische Verbindungen zwischen einzelnen Anschlusssätzen 132₁ bis 132₇ zugeordneten Steckkontakten 88 und den zu diesen komplementären Stecckontakten 118 hergestellt, wobei jeder der Anschlusssätze 132₁ bis 132₇ einen Einzelversorgungsanschluss 134₁ bis 134₇ aufweist und außerdem einen Masseanschluss 136₁ bis 136₇.

Die Einzelversorgungsanschlüsse 134₁ bis 134₇ sind ihrerseits mit von der Versorgungseinrichtung 74 kommenden Einzelversorgungsleitungen 142₁ bis 142₇ verbunden, so dass jeder der Anschlusssätze 132₁ bis 132₇ von der Versorgungseinrichtung 74 einzeln mit elektrischer Leistung versorgt und somit angesteuert werden kann.

Ferner sind die Masseanschlüsse 136₁ bis 136₇ beispielsweise mit einzelnen Masseleitungen 144₁ bis 144₇ verbunden, die ihrerseits zu einer gemeinsamen Fahrzeugmasse 146 geführt sind.

Dabei können die einzelnen Masseleitungen 144 bis zu der Versorgungseinrichtung 74 und somit auch über die Versorgungsleitung 72 geführt werde.

Es besteht aber auch die Möglichkeit alle einzelnen Masseleitungen 114₁ bis 144₇ oder einen Teil der einzelnen Masseleitungen 144₁ bis 144₇ zu einer Masseleitung zusammenzufassen.

Die Prüfschaltung 90 ist ferner mit einem Prozessor 150 versehen, welcher für jeden der Anschlusssätze 132₁ bis 132₇ einen Prüfausgang 152₁ bis 152₇ aufweist, der mit dem jeweiligen Einzelversorgungsanschluss 134₁ bis 134₇ der Anschlusssätze 132₁ bis 132₇ verbunden ist, und zwar jeweils über eine Diode 154, die den Prüfausgang 152 vor Spannungen schützt, die beim Ansteuern der Einzelversorgungsleitungen 142₁ bis 142₇ durch die Versorgungseinrichtung 74 auftreten.

Ferner weist der Prozessor 150 Prüfeingänge 156₁ bis 156₇ auf, die mit den einzelnen Masseanschlüssen 136₁ bis 136₇ der Anschlusssätze 132₁ bis 132₇ verbunden sind.

Der Prüfprozessor 150 ist ferner mit einem Steuereingang 158 versehen, welcher über einen Schalter 162 oder einen Sensor, der beispielsweise eine Verbindung zu einer Versorgungsspannung U herstellt, ansteuerbar ist.

Der Schalter 162 oder der Sensor ist in dem Außengehäuse 82 der Anschlusseinheit 80 angeordnet und zwar so, dass dieser durch das Einstecken des Steckverbinders 110 betätigt wird.

Darüber hinaus ist der Prozessor 150 mit Steuerausgängen 164 und 166 versehen, wobei der Steuerausgang 164 zur Ansteuerung einer Unterbrecherschaltung 172 dient, die einen den Einzelversorgungsleitungen 142₁ bis 142₇ zugeordneten, insbesondere in die Einzelversorgungsleitungen 142₁ bis 142₇ integriert, Satz von Unterbrecherelementen 174 umfasst, und welche es erlaubt, jede der Einzelversorgungsleitungen 142₁ bis 142₇, die von der Versorgungseinrichtung 74 zu den Einzelversorgungsanschlüssen 134₁ bis 134₇ führen, elektrisch zu unterbrechen.

Ferner umfasst die Unterbrecherschaltung 172 einen Satz von Unterbrecherelementen 176, welche den Masseleitungen 144 zugeordnet, insbesondere in diese integriert, sind und entweder die einzelnen Masseleitungen 144₁ bis 144₇ unterbrechen oder die zusammengefassten Masseleitungen 144 unterbrechen.

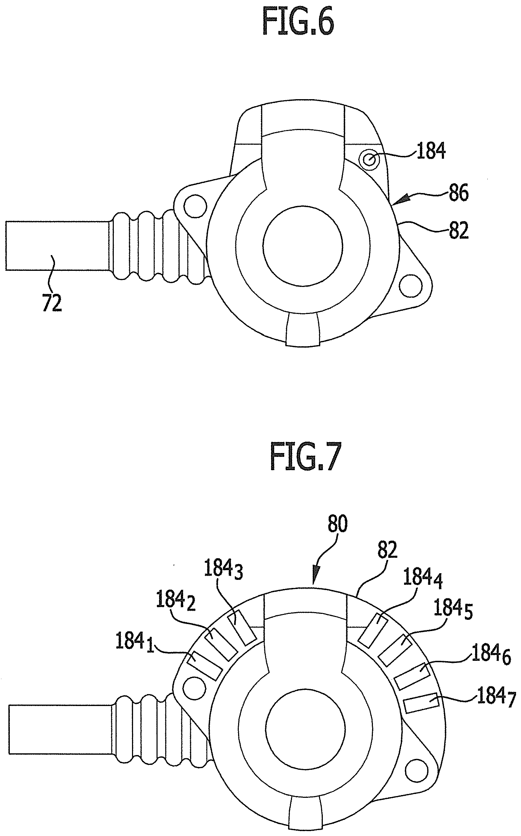

Der Steuerausgang 166 dient zur Ansteuerung einer Anzeigeeinheit 182, welche, wie in Fig. 6 dargestellt, beispielsweise ein optisches Anzeigeelement 184 aufweist, das am Außengehäuse 82 angeordnet ist und beispielsweise bei Ansteuerung der Anzeigeeinheit 182 aufleuchtet.

Zur Versorgung des Prozessors 150 ist dieser an die Versorgungsspannung U des Versorgungsnetzes im Kraftfahrzeug 10 angeschlossen.

Ferner ist der Prozessor 150 noch mit einem Steuerausgang 168 versehen, welcher zu der Versorgungseinrichtung 74 geführt ist und eine Funktionsblockade der Versorgungseinrichtung 74 ermöglicht.

Die erfindungsgemäße Prüfschaltung 90 arbeitet beispielsweise so, dass bei einem Einstecken des Steckverbinders 110 in die Anschlusseinheit 80 der Schalter 162 betätigt wird und diese Betätigung am Steuereingang 158 dazu führt, dass der Prozessor 150 einen Prüfzyklus startet.

Zu Beginn des Prüfzyklus steuert der Prozessor 150, beispielsweise über den Steuerausgang 164, die Unterbrecherschaltung 172 derart an, dass diese zumindest mittels des Satzes von Unterbrecherelementen 174 sämtliche von der Versorgungseinrichtung 74 zu den Einzelversorgungsanschlüssen 134₁ bis 134₇ führenden Einzelversorgungsleitungen 142₁ bis 142₇ elektrisch unterbricht.

Vorzugsweise wird aber auch der Satz von Unterbrecherelementen 176 so angesteuert, dass alle Masseleitungen 144₁ bis 144₇ unterbrochen werden.

Dadurch wird sichergestellt, dass weder seitens der Versorgungseinrichtung 74 noch seitens der Fahrzeugmasse 146 Störeinflüsse auftreten können.

Vorzugsweise arbeitet der Prozessor 150 auch so, dass dieser über den Steuerausgang 168 die Versorgungseinrichtung 74 derart ansteuert, dass diese temporär abgeschaltet wird.

Bei diesem Prüfzyklus wird von jedem der Prüfausgänge 152₁ bis 152₇ dem jeweiligen Einzelversorgungsanschluss 134₁ bis 134₇ der Anschlusssätze 132₁ bis 132₇ ein Strom zugeführt.

Ist der dem jeweiligen Anschlusssatz 132₁ bis 132₇ zugeordnete Verbraucher, beispielsweise die jeweilige Leuchteinheit 54, 56 oder 58, funktionsfähig, so fließt über die jeweilige Leuchteinheit 54, 56 und 58 ein Strom, der über den jeweiligen Masseanschluss 136₁ bis 136₇ zum entsprechenden Prüfeingang 156₁ bis 156₇ fließt und somit von einer Strommesseinheit im Prozessor 150 detektiert wird.

Ist eine der Leuchteinheiten 54, 56 oder 58 defekt, so wird an dem jeweiligen Prüfeingang 156 der Prüfeingänge 156₁ bis 156₇ kein Strom detektiert.

In gleicher Weise lassen sich auch zusätzlich zu den Leuchteinheiten 54, 56, 58 andere Verbraucher in der Transporteinrichtung 30 prüfen, die über die Steckverbindereinheit 66 versorgt werden sollen.

Nach Auswertung der an den Prüfeingängen 156₁ bis 156₇ erfassten Ströme generiert der Prozessor 150 an dem Steuerausgang 166 ein Ansteuersignal für die Anzeigeeinheit 192, welches dazu führt, dass das optische Anzeigeelement 184 aufleuchtet, so dass ein Benutzer sehen kann, dass alle über die Steckverbindereinheit 66 zu versorgenden Verbraucher der Transporteinrichtung 30 funktionsfähig sind.

Bei Beendigung des Prüfzyklus steuert der Prozessor 150, beispielsweise über den Steuerausgang 164 die Unterbrecherschaltung 172 so an, dass diese die elektrische Unterbrechung der Einzelversorgungsleitungen 142₁ bis 142₇ und der Masseleitungen 144₁ bis 144₇ beendet und die Versorgungseinrichtung 74 mit den Anschlusssätzen 132₁ bis 132₇ elektrisch verbindet.

Nach Durchführung des Prüfzyklus steuert der Prozessor 150 über den Steuerausgang 168 wiederum die Versorgungseinrichtung 74 derart an, dass diese wieder ihre übliche Funktion aufnimmt.

Bei dem bislang beschriebenen Ausführungsbeispiel ist lediglich ein einzelnes optisches Anzeigeelement vorgesehen, wie in Fig. 6 dargestellt, es besteht aber auch die Möglichkeit, wie in Fig. 7 dargestellt, eine Vielzahl von optischen Anzeigeelementen 184₁ bis 184₇ an dem Außengehäuse 82 der Anschlusseinheit 80 vorzusehen, die entweder durch einen gemeinsamen Steuerausgang 166 oder durch mehrere Steuerausgänge, beispielsweise 166'1 bis 166'₇ ansteuerbar sind und somit eine Einzelanzeige der Funktionsfähigkeit der einzelnen Verbraucher, insbesondere der einzelnen Leuchteinheit 54, 56, 58 zulässt.

## Patentansprüche

1. Anschlusseinheit (80) für einen Steckverbinder (110) einer mit einem Kraftfahrzeug (10) verbindbaren Transporteinrichtung (30), deren Leuchteinheiten (54, 56, 58) entsprechend einer Beleuchtung des Kraftfahrzeugs (10) anzusteuern sind, wobei die Anschlusseinheit (80) eine mit dem Steckverbinder (110) verbindbare Anschlussätze (132) für die einzelnen Leuchteinheiten (54, 56, 58) aufweisende Steckverbinderaufnahme (108) und eine elektrische Versorgungsleitung (72) zum Anschluss der Anschlusssätze (132) an eine kraftfahrzeugseitige Versorgungseinrichtung (74) umfasst,
**dadurch gekennzeichnet, dass** die Anschlusseinheit (80) eine Prüfschaltung (90) umfasst, mit welcher eine von der Versorgungseinrichtung (74) unabhängige Funktionsprüfung aller über den in die Steckverbinderaufnahme (108) eingesteckten Steckverbinder (110) versorgten Leuchteinheiten (54, 56, 58) der Transporteinrichtung (30) erfolgt, dass die Prüfschaltung (90) zur Durchführung eines Prüfzyklus den zu prüfenden Anschlusssatz (132) von der Versorgungseinrichtung (74) elektrisch abkoppelt.

2. Anschlusseinheit nach Anspruch 1, **dadurch gekennzeichnet, dass** die Prüfschaltung (90) mit jedem einzelnen, der Anschlusssätze (132) separat verbunden ist.

3. Anschlusseinheit nach einem der voranstehenden Ansprüche, **dadurch gekennzeichnet, dass** die Prüfschaltung (90) bei der Funktionsprüfung den über jeden der Anschlusssätze (132) fließenden Strom mittels einer Strommesseinheit (150) erfasst und dass insbesondere die Prüfschaltung (90) den über jeden der Anschlusssätze (132) fließenden Strom separat erfasst.

4. Anschlusseinheit nach einem der voranstehenden Ansprüche, **dadurch gekennzeichnet, dass** die Prüfschaltung (90) die Funktionsprüfung jedes Anschlusssatzes (132) einzeln durchführt und dass insbesondere die Prüfschaltung (90) die Funktionsprüfung der Anschlusssätze (132) gleichzeitig durchführt oder in einer Reihenfolge nacheinander ausführt.

5. Anschlusseinheit nach einem der voranstehenden Ansprüche, **dadurch gekennzeichnet, dass** die Prüfschaltung (90) einen Prüfzyklus beim Auftreten eines externen Ereignisses startet.

6. Anschlusseinheit nach einem der voranstehenden Ansprüche, **dadurch gekennzeichnet, dass** die Prüfschaltung (90) nach Durchführung der Funktionsprüfung jeden Anschlusssatz (132) wiederum mit der Versorgungseinrichtung (74) elektrisch koppelt.

7. Anschlusseinheit nach einem der voranstehenden Ansprüche, **dadurch gekennzeichnet, dass** die Prüfschaltung (90) einen Prozessor (150) umfasst, welcher einen Prüfzyklus ausführt und während dieses Prüfzyklus die Leuchteinheiten (54, 56, 58) überprüft.

8. Anschlusseinheit nach einem der voranstehenden Ansprüche, **dadurch gekennzeichnet, dass** die Prüfschaltung (90) mit jeder zu einem der Anschlusssätze (132) führenden und von der Versorgungseinrichtung (74) kommenden Einzelversorgungsleitung (142) bei der Durchführung der Funktionsprüfung verbunden ist.

9. Anschlusseinheit nach einem der voranstehenden Ansprüche, **dadurch gekennzeichnet, dass** die Prüfschaltung (90) eine Unterbrecherschaltung (172) umfasst, welche bei der Funktionsprüfung der Leuchteinheiten (54, 56, 58) die Verbindung zwischen dem jeweiligen Anschlusssatz (132) und der Versorgungseinrichtung (74) elektrisch unterbricht, und dass insbesondere die Unterbrecherschaltung (172) eine Masseverbindung zwischen dem jeweiligen Anschlusssatz (132) und einer Fahrzeugmasse (146) elektrisch unterbricht.

10. Anschlusseinheit nach einem der Ansprüche 7 bis 9, **dadurch gekennzeichnet, dass** der Prozessor (150) der Prüfschaltung (90) die mindestens eine Unterbrecherschaltung (172) ansteuert.

11. Anschlusseinheit nach einem der voranstehenden Ansprüche, **dadurch gekennzeichnet, dass** mit der Prüfschaltung (90) eine von der Versorgungseinrichtung (74) unabhängige Funktionsprüfung aller über den in die Steckverbinderaufnahme (108) eingesteckten Steckverbinder (110) versorgten Verbraucher der Transporteinrichtung (30) erfolgt.

12. Anschlusseinheit nach einem der voranstehenden Ansprüche, **dadurch gekennzeichnet, dass** die Prüfschaltung (90) ein einem Prüfergebnis der Funktionsprüfung entsprechendes Ausgangssignal erzeugt.

13. Anschlusseinheit nach Anspruch 12, **dadurch gekennzeichnet, dass** die Anschlusseinheit (80) eine optische Anzeigeeinheit (182) aufweist und dass die Prüfschaltung (90) die optische Anzeigeeinheit (182) mit dem Ausgangssignal ansteuert und dass insbesondere die optische Anzeigeeinheit (182) mit einem optischen Anzeigeelement (184) ein Lichtsignal erzeugt.

14. Anschlusseinheit nach einem der Ansprüche 12 bis 13, **dadurch gekennzeichnet, dass** die Prüfschaltung (90) bei einem positiven Prüfergebnis der Leuchteinheiten (54, 56, 58) ein einziges Ausgangssignal erzeugt.

15. Anschlusseinheit nach einem der Ansprüche 12 bis 14, **dadurch gekennzeichnet, dass** die Prüfschaltung (90) das Prüfergebnis der einzelnen Leuchteinheiten (54, 56, 58) durch einzelne Ausgangssignale anzeigt.

16. Kraftfahrzeug (10) mit einer Anschlusseinheit (80) für eine Transporteinrichtung (30) deren Leuchteinheiten (54, 56, 58) entsprechend einer Beleuchtung des Kraftfahrzeugs (10) anzusteuern sind, **dadurch gekennzeichnet, dass** die Anschlusseinheit (80) nach einem der voranstehenden Ansprüche ausgebildet ist.

17. Kraftfahrzeug (10) mit einer mit diesem verbundenen Transporteinrichtung (30) deren Leuchteinheiten (54, 56, 58) entsprechend einer Beleuchtung des Kraftfahrzeugs anzusteuern sind, **dadurch gekennzeichnet, dass** die Anschlusseinheit nach einem der Ansprüche 1 bis 15 ausgebildet ist.

## Claims

1. Connection unit (80) for a connector (110) of a transport device (30) connectable to a motor vehicle (10), the light units (54, 56, 58) of said transport device being activatable in accordance with the lighting of the motor vehicle (10), wherein the connection unit (80) comprises a connector receptacle (108) with sets of connections (132) for the individual light units (54, 56, 58) connectable to the connector (110) and an electrical supply line (72) for connecting the sets of connections (132) to a supply unit (74) on the motor vehicle,
**characterized in that** the connection unit (80) comprises a test circuit (90) for testing, independently of the supply unit (74), the functioning of all the light units (54, 56, 58) of the transport device (30) supplied via the connector (110) plugged into the connector receptacle (108), that for carrying out a test cycle the test circuit (90) disconnects the set of connections (132) to be tested electrically from the supply unit (74).

2. Connection unit as defined in claim 1, **characterized in that** the test circuit (90) is connected separately to each individual one of the sets of connections (132).

3. Connection unit as defined in either one of the preceding claims, **characterized in that** during the functional testing the test circuit (90) detects the current flowing through each of the sets of connections (132) with the aid of a current measuring unit (150) and that, in particular, the test circuit (90) detects the current flowing through each of the sets of connections (132) separately.

4. Connection unit as defined in any one of the preceding claims, **characterized in that** the test circuit (90) tests the functioning of each set of connections (132) individually and that, in particular, the test circuit (90) tests the functioning of the sets of connections (132) at the same time or in sequence one after the other.

5. Connection unit as defined in any one of the preceding claims, **characterized in that** the test circuit (90) starts a test cycle when an external incident occurs.

6. Connection unit as defined in any one of the preceding claims, **characterized in that** after carrying out the functional testing the test circuit (90) connects each set of connections (132) again electrically to the supply unit (74).

7. Connection unit as defined in any one of the preceding claims, **characterized in that** the test circuit (90) comprises a processor (150) for carrying out a test cycle and checking the light units (54, 56, 58) during this test cycle.

8. Connection unit as defined in any one of the preceding claims, **characterized in that** while carrying out the functional testing the test circuit (90) is connected to each individual supply line (142) coming from the supply unit (74) and leading to one of the sets of connections (132).

9. Connection unit as defined in any one of the preceding claims, **characterized in that** the test circuit (90) comprises a circuit breaker (172) for breaking the electrical connection between the respective set of connections (132) and the supply unit (74) during the functional testing of the light units (54, 56, 58).

10. Connection unit as defined in any one of claims 7 to 9, **characterized in that** the processor (150) of the test circuit (90) activates the at least one circuit breaker (172).

11. Connection unit as defined in any one of the preceding claims, **characterized in that** with the test circuit (90) the functioning of all the consumers of the transport unit (30) supplied via the connector (110) plugged into the connector receptacle (108) is tested independently of the supply unit (74).

12. Connection unit as defined in any one of the preceding claims, **characterized in that** the test circuit (90) generates an output signal corresponding to a test result of the functional testing.

13. Connection unit as defined in claim 12, **characterized in that** the connection unit (80) has an optical display unit (182) and that the test circuit (90) activates the optical display unit (182) with the output signal and that, in particular, the optical display unit (182) generates a light signal by way of an optical display element (184).

14. Connection unit as defined in any one of claims 12 to 13, **characterized in that** the test circuit (90) generates a single output signal with a positive test result of the light units (54, 56, 58).

15. Connection unit as defined in any one of claims 12 to 14, **characterized in that** the test circuit (90) indicates the test result of the individual light units (54, 56, 58) by way of individual output signals.

16. Motor vehicle (10) with a connection unit (80) for a transport device (30), the light units (54, 56, 58) thereof being activatable in accordance with the lighting of the motor vehicle (10), **characterized in that** the connection unit (80) is designed in accordance with any one of the preceding claims.

17. Motor vehicle (10) with a transport device (230) connected to it, the light units (54, 56, 58) thereof being activatable in accordance with the lighting of the motor vehicle, **characterized in that** the connection unit is designed in accordance with any one of claims 1 to 15.

## Revendications

1. Unité de raccordement (80) pour un connecteur à fiche (110) d'un dispositif de transport (30) reliable à un véhicule automobile (10), dont les unités d'éclairage (54, 56, 58) doivent être commandées conformément à un éclairage du véhicule (10), l'unité de raccordement (80) comprenant un logement (108) de connecteur à fiche présentant des jeux de raccordement (132) pouvant être reliés au connecteur à fiche (110) et destinés aux différentes unités d'éclairage (54, 56, 58) et un câble d'alimentation électrique (72) pour raccorder les jeux de raccordement (132) à un dispositif d'alimentation (74) du véhicule, **caractérisée en ce que** l'unité de raccordement (80) comprenant un circuit de test (90) permettant de réaliser un test fonctionnel, indépendant du dispositif d'alimentation (74), de toutes les unités d'éclairage (54, 56, 58) du dispositif de transport (30) alimentées par l'intermédiaire du connecteur à fiche (110) enfiché dans le logement (108) de connecteur à fiche, que le circuit de test (90) déconnecte électriquement le jeu de raccordement (132) à tester du dispositif d'alimentation (74) pour exécuter un cycle de test.

2. Unité de raccordement selon la revendication 1, **caractérisée en ce que** le circuit de test (90) est relié séparément à chacun des jeux de raccordement (132) .

3. Unité de raccordement selon l'une quelconque des revendications précédentes, **caractérisée en ce que** le circuit de test (90), lors du test fonctionnel, détecte le courant passant par chacun des jeux de raccordement (132) au moyen d'une unité de mesure du courant (150) et **en ce que** le circuit de test (90) en particulier détecte séparément le courant passant par chacun des jeux de raccordement (132).

4. Unité de raccordement selon l'une quelconque des revendications précédentes, **caractérisée en ce que** le circuit de test (90) exécute individuellement le test fonctionnel de chaque jeu de raccordement (132) et **en ce que** le circuit de test (90) en particulier exécute le test fonctionnel des jeux de raccordement (132) en même temps ou successivement dans un ordre donné.

5. Unité de raccordement selon l'une quelconque des revendications précédentes, **caractérisée en ce que** le circuit de test (90) démarre un cycle de test lors de la survenue d'un événement externe.

6. Unité de raccordement selon l'une quelconque des revendications précédentes, **caractérisée en ce que** le circuit de test (90) couple électriquement, après l'exécution du test fonctionnel, chaque jeu de raccordement (132) à son tour au dispositif d'alimentation (74).

7. Unité de raccordement selon l'une quelconque des revendications précédentes, **caractérisée en ce que** le circuit de test (90) comporte un processeur (150) qui exécute un cycle de test et vérifie les unités d'éclairage (54, 56, 58) pendant ce cycle de test.

8. Unité de raccordement selon l'une quelconque des revendications précédentes, **caractérisée en ce que** le circuit de test (90) est relié à chaque câble d'alimentation individuel (142) allant jusqu'à l'un des jeux de raccordement (132) et venant du dispositif d'alimentation (74) lors de l'exécution du test fonctionnel.

9. Unité de raccordement selon l'une quelconque des revendications précédentes, **caractérisée en ce que** le circuit de test (90) comporte un circuit de coupure (172) qui coupe électriquement la liaison entre le jeu de raccordement (132) concerné et le dispositif d'alimentation (74) lors du test fonctionnel des unités d'éclairage (54, 56, 58) et **en ce que** le circuit de coupure (172) en particulier coupe électriquement une liaison de masse entre le jeu de raccordement (132) respectif et une masse (146) du véhicule.

10. Unité de raccordement selon l'une quelconque des revendications 7 à 9, **caractérisée en ce que** le processeur (150) du circuit de test (90) commande l'au moins un circuit de coupure (172).

11. Unité de raccordement selon l'une quelconque des revendications précédentes, **caractérisée en ce que**, avec le circuit de test (90), c'est un test fonctionnel, indépendant du dispositif d'alimentation (74), de tous les consommateurs du dispositif de transport (30) alimentés par les connecteurs à fiche (110) enfichés dans le logement (108) de connecteur à fiche qui est réalisé.

12. Unité de raccordement selon l'une quelconque des revendications précédentes, **caractérisée en ce que** le circuit de test (90) génère un signal de sortie correspondant à un résultat du test fonctionnel.

13. Unité de raccordement selon la revendication 12, **caractérisée en ce qu'**elle (80) présente une unité d'affichage optique (182) et **en ce que** le circuit de test (90) commande l'unité d'affichage optique (182) avec le signal de sortie et **en ce que** l'unité d'affichage (182) en particulier génère un signal lumineux avec un élément d'affichage optique (184).

14. Unité de raccordement selon l'une quelconque des revendications 12 à 13, **caractérisée en ce que** le circuit de test (90) génère un seul signal de sortie en cas de résultat de test positif des unités d'éclairage (54, 56, 58).

15. Unité de raccordement selon l'une quelconque des revendications 12 à 14, **caractérisée en ce que** le circuit de test (90) affiche le résultat du test des différentes unités d'éclairage (54, 56, 58) grâce à différents signaux de sortie.

16. Véhicule automobile (10) doté d'une unité de raccordement (80) destiné à un dispositif de transport (30) dont les unités d'éclairage (54, 56, 58) doivent être commandées conformément à un éclairage du véhicule (10), **caractérisé en ce que** l'unité de raccordement (80) est configurée selon l'une quelconque des revendications précédentes.

17. Véhicule automobile (10) doté d'un dispositif de transport (30) relié à celui-ci, dont les unités d'éclairage (54, 56, 58) doivent être commandées conformément à l'éclairage du véhicule, **caractérisé en ce que** l'unité de raccordement est configurée selon l'une quelconque des revendications 1 à 15.
